# EUROPEAN PATENT APPLICATION

(11) **EP 4 306 555 A2**
(43) Date of publication of application: **17.01.2024**
(21) Application number: 23185706.1
(22) Date of filing: 15.07.2023
(51) Int. Cl.: C08F 110/14

(54) **NOVEL TITANIUM COMPLEXES AS CATALYSTS FOR ALPHA OLEFIN POLYMERIZATION**

(30) Priority: 15.07.2022 IN 202221040672
(71) Applicant: Hindustan Petroleum Corporation Limited, Mumbai, Maharashtra 400020 (IN)
(72) Inventor: MOTE, NILESH RAJESH, 560067 Hoskote Bengaluru (IN); TALUKDAR, MONIKANGKANA, 560067 Hoskote Bengaluru (IN); PATIL, YOGESH POPATRAO, 560067 Hoskote Bengaluru (IN); CHELLIAHN, BENNET, 560067 Hoskote Bengaluru (IN); BOJJA, RAMACHANDRARAO, 560067 Hoskote Bengaluru (IN)
(74) Representative: Calysta NV

(57) **Abstract**

The present disclosure pertains to the technical field of a catalyst. The present disclosure relates to a complexing agent for preparing titanium complexes for alpha olefin polymerization. In particular, the present disclosure provides titanium complexes for alpha olefin polymerization and methods of preparation thereof.

## Description

### FIELD OF THE INVENTION

The present disclosure generally pertains to the technical field of catalysts. Specifically, the present disclosure provides a complexing agent for preparing titanium complexes for alpha olefin polymerization. Aspects of the present disclosure also provide titanium complexes for alpha olefin polymerization and methods of preparation thereof.

### BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

Reduction of TiCl₄ to TiCl₃ using alkyl aluminums is well known in the art. Different forms of TiCl₃ have been obtained based on the synthetic procedure and complexing agents. In the state of the art, brown form of TiCl₃ has been converted to its corresponding violet form using some complexing agents, or by elevated heat treatment. The use of violet form of TiCl₃ for the polymerization of propylene has also been extensively carried out in the state of the art. Ultra-high molecular weight poly-α-olefins (*i.e*., poly-1-hexene, poly-1-octene, poly-1-decene and poly-1-dodecene) are produced industrially using delta TiCl₃. Some of the known techniques for preparation of TiCl₃ have been summarized below.

US4195069A discloses a process for the preparation of violet TiCl₃ by reducing TiCl₄ with an organo-aluminum compound. The process comprises the following steps: (a) TiCl₄ is premixed with a complexing agent in an inert organic solvent, the molar ratio of complexing agent: TiCl₄ being within the range from 0.3:1 to 2:1; (b) the organo-aluminium compound is premixed with a complexing agent in an inert organic solvent, the molar ratio of complexing agent: organo-aluminium compound being at least 0.25: 1; (c) reduction to TiCl₃ and precipitation of TiCl₃ is carried out by combining at least one stoichiometric equivalent of TiCl₄ in the premixed composition of step (a) with one stoichiometric equivalent of the organo-aluminum compound in the premixed composition of step (b) over a period of less than one hour at a temperature within the range 60 to 110°C. The final concentration of violet TiCl₃ in the reaction mixture is at least 0.2 mol./litre.

US4200717A discloses solid titanium trichloride, produced by precipitation from a homogeneous solution or mixture with ether. The solid titanium trichloride is treated by pre-polymerization with propylene at a partial pressure of less than 1 kg/cm². The pretreated titanium trichloride containing a propylene polymer is then admixed with an organo-aluminum compound and the admixture is used as a catalyst in the polymerization of propylene.

US6034025A discloses a method for producing a catalyst for the polymerization or copolymerization of olefins. The method includes: producing a magnesium compound solution by reacting a magnesium halide compound in the mixture of a cyclic ether and two alcohols with an organo-silane compound. The magnesium compound solution may be reacted with a titanium halide compound such that precipitated solid components are formed. These precipitated solid components may be reacted with a titanium compound and an electron donor to produce the polymerization catalyst.

US10301410B2 discloses a catalyst consisting essentially of at least one tertiary monophenyl amine having a formula R¹R²N-aryl, where R¹ and R² are the same or different, and each is a hydrogen, an alkyl, or a cycloalkyl group, where at least one of R¹ and R² contain at least one carbon atom; at least one titanium halide having a formula TiXₘ, where m is from 2.5 to 4.0 and X is a halogen containing moiety; and at least one co-catalyst having a formula AIRₙ Y₃₋ₙ where R is a hydrocarbon radical, Y is a halogen or hydrogen, and n is 1-3.

WO2021110563A1 discloses a Ziegler Natta (ZN) catalyst for olefin polymerization comprising Mg, Ti and optionally internal electron donor, aluminum alkyl compound and diazo based external electron donor of formula (I). Suitable examples of internal electron donor include C2-C20 aliphatic ethers and in particular cyclic ethers, preferably having 3-5 carbon atoms, such as tetrahydrofuran and dioxane.

Currently, ultra-high molecular weight poly alpha olefins find applications in transportation of crude oil, light products and heavy oils worldwide through pipelines. These are commonly known as drag reducing agents (DRA). DRAs decrease the amount of energy lost in turbulent formation which ultimately helps to increase the flow. Increasing the flow rate, throughput capacity and flexibility of pipelines makes these ultra-high molecular weight poly-alpha olefins one of the most valuable components in petroleum industry.

Since transportation of fuel via pipeline is one of the cheapest mode of transportation, application of DRAs, especially ultra-high molecular weight alpha olefin polymerization, is expected to increase manifold. As evident in the prior arts discussed hereinabove, there exist several types and techniques to obtain ZN catalysts to cater to the increasing demand. As a limitation in the existing prior arts, there has not been sufficient work carried out in the field of ZN catalysts, particularly utilizing bio-based starting materials. Accordingly, there always remains a need for improved and/or alternate starting materials for producing improved ZN catalysts providing acceptable and/or improved polymerization of alpha olefins.

In view of the above, there is a need for new and improved ZN catalysts which address at least the aforementioned problems.

### OBJECTS OF THE INVENTION

An objective of the present invention is to provide a complexing agent for preparing titanium complexes for alpha olefin polymerization.

Another objective of the present invention is to provide a method for preparing an unsupported titanium complex.

Another objective of the present invention is to provide a method for preparing a supported titanium complex.

Another objective of the present invention is to provide a method for preparing a co-precipitated titanium complex.

Yet another objective of the present invention is to provide a method for preparing ultra-high molecular weight poly alpha olefins from alpha olefin polymerization.

### SUMMARY OF THE INVENTION

This summary is provided to introduce a selection of concepts in a simplified form that are further described below in Detailed Description section. This summary is not intended to identify key features or essential features of the claimed subject matter, nor is it intended to be used as an aid in determining the scope of the claimed subject matter.

The present disclosure provides a complexing agent for preparing titanium complexes for alpha olefin polymerization. In some embodiments, the complexing agent is selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

An aspect of the present disclosure relates to a method for preparing an unsupported titanium complex, the method comprising: mixing a titanium halide of general formula:

TiₘXₙ

wherein, 'm' and 'n' are real numbers ranging between 1 to 4; and X is a halogen,
with a complexing agent selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

Another aspect of the present disclosure relates to a method for preparing a supported titanium complex, the method comprising:
(a) mixing a magnesium compound of general formula:

   MgₚY_{q}

   wherein,
   `p' and `q' are real numbers ranging between 1 to 2, and
   Y is selected from a halogen, an alkyl group, and an alkoxy group having 2 to 4 carbon atoms,
   with a complexing agent to obtain a reaction mixture, and
(b) mixing a titanium halide of following general formula:

   TiₘXₙ

   wherein,
   'm' and 'n' are real numbers ranging between 1 to 4, and
   X is a halogen,
   with the reaction mixture to obtain the supported titanium complex,
   wherein the complexing agent is selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

Further aspect of the present disclosure relates to a method for preparing a co-precipitated titanium complex, the method comprising:
reacting a Grignard reagent of general formula:

R₁-Mg-X

wherein,
R₁ is selected from:
   (i) a linear or branched, substituted or unsubstituted alkyl having 1 to 10 carbon atoms, or
   (ii) a substituted or unsubstituted aryl having 6 to 12 carbon atoms, and
X is a halogen,
with a titanium compound of formula:

   Ti(OR₂)₄
wherein,
R₂ is an alkyl group having 1 to 10 carbon atoms,
in presence of a complexing agent to obtain the co-precipitated titanium complex,
wherein the complexing agent is selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

Still further aspect of the present disclosure relates to a method for preparing an ultra-high molecular weight poly alpha olefin from alpha olefin polymerization in presence of: the unsupported titanium complex, or the supported titanium complex, or the co-precipitated titanium complex.

Still further aspect of the present disclosure is drawn towards use of a compound selected from the group consisting of: dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, crown ethers and combination thereof, as a complexing agent for preparing an unsupported titanium complex, or a supported titanium complex, or a co-precipitated titanium complex for alpha olefin polymerization.

Various objects, features, aspects and advantages of the inventive subject matter will become more apparent from the following detailed description of preferred embodiments.

### DETAILED DESCRIPTION OF THE INVENTION

The following is a detailed description of embodiments of the disclosure. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

Unless the context requires otherwise, throughout the specification which follow, the word "comprise" and variations thereof, such as, "comprises" and "comprising" are to be construed in an open, inclusive sense that is as "including, but not limited to."

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

In some embodiments, the numbers expressing quantities of ingredients, properties such as concentration, reaction conditions, and so forth, used to describe and claim certain embodiments of the invention are to be understood as being modified in some instances by the term "about." Accordingly, in some embodiments, the numerical parameters set forth in the written description are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable.

The recitation of ranges of values herein is merely intended to serve as a shorthand method of referring individually to each separate value falling within the range. Unless otherwise indicated herein, each individual value is incorporated into the specification as if it is individually recited herein.

All processes described herein can be performed in any suitable order unless otherwise indicated herein or otherwise clearly contradicted by context. The use of any and all examples, or exemplary language (e.g., "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

The headings and abstract of the invention provided herein are for convenience only and do not interpret the scope or meaning of the embodiments.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

All publications herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

Groupings of alternative elements or embodiments of the invention disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description that follows, and the embodiments described herein, is provided by way of illustration of an example, or examples, of particular embodiments of the principles and aspects of the present disclosure. These examples are provided for the purposes of explanation, and not of limitation, of those principles and of the disclosure.

It should also be appreciated that the present invention can be implemented in numerous ways, including as a system, a method or a device. In this specification, these implementations, or any other form that the invention may take, may be referred to as processes. In general, the order of the steps of the disclosed processes may be altered within the scope of the invention.

Various terms as used herein are shown below. To the extent a term used in a claim is not defined below, it should be given the broadest definition persons in the pertinent art have given that term as reflected in printed publications and issued patents at the time of filing.

An aspect of the present disclosure provides a complexing agent for preparing a titanium complex for alpha olefin polymerization. In some embodiments, the complexing agent is selected from the group consisting of: dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

In an embodiment, the complexing agents are environmentally benign and bio-based molecules, for instance, dianhydrohexitol based esters and ethers. Dianhydrohexitol are heterocyclic compounds that are derived from sugar. In some embodiments, the dianhydrohexitol is selected from a group consisting of isosorbide, isomannide, and isoidide. In some embodiments, the crown ether is selected from a group consisting of 9-crown-3, 12-crown-4, 15-crown-5, 18-crown-6 and combination thereof.

The complexing agents of the present disclosure act as internal donors and result in formation of titanium complexes that are in turn used as catalysts for alpha olefin polymerization. Therefore, the titanium complexes described herein may be interchangeably also referred as the catalyst in the context of olefin polymerization. The titanium complexes synthesized using these complexing agents in accordance with the present disclosure can be in the form of supported, unsupported or co-precipitated titanium complexes, which can be advantageously used to produce poly-alpha olefins.

The titanium complexes are synthesized from the complexing agents, which are environmentally benign and are bio-based molecules. The synthesis of titanium complexes using bio-based molecules is a green approach.

Another aspect of the present disclosure provides a method for preparing an unsupported titanium complex, the method comprising:
mixing a titanium halide of general formula:

TiₘXₙ

wherein,
'm' and 'n' are real numbers ranging between 1 to 4 and
X is a halogen,
with the complexing agent, as described hereinabove.

Accordingly, the embodiments described hereinabove in respect of the complexing agent are applicable here as well.

In the present context, "unsupported" refers to absence of a support material in the catalyst.

In an embodiment, halogens can be selected from chlorine, bromine, iodine, and fluorine. Preferably, the halogen is chlorine.

In one embodiment, the method comprises the following steps:
(a) mixing the titanium halide with the complexing agent in a solvent to obtain a reaction mixture;
(b) heating the reaction mixture at a temperature ranging between 80°C to 150°C;
(c) adding an organo-aluminum compound to the reaction mixture of step (b); and
(d) mixing the reaction mixture of step (c) at a temperature ranging between 30°C to 110°C to obtain the unsupported titanium complex.

Suitable solvents in the present context include hydrocarbon solvents. In an embodiment, the hydrocarbon solvent is selected from a group consisting of kerosene, toluene, xylene, hexane, petroleum ether, heptane, and combinations thereof.

In an embodiment, the reaction mixture is heated at a temperature ranging between 80°C to 150°C, or 80°C to 140°C, or 80°C to 130°C. In another embodiment, the reaction mixture is heated at a temperature ranging between 90°C to 130°C, or 90°C to 120°C.

In an embodiment, the organo-aluminum compound is selected from a group consisting of: trialkylaluminum, trialkenylaluminums, dialkylaluminum halides, alkylaluminumsesquihalides, dialkylaluminum hydrides, partially hydrogenated alkylaluminum, aluminoxane, and combinations thereof.

In another embodiment, the organo-aluminum compound is selected from the group consisting of trialkylaluminum, trialkenylaluminums, dialkylaluminum halides, alkylaluminumsesquihalides, and dialkylaluminum hydrides. In yet another embodiment, the organo-aluminum compound is trialkylaluminum, and/or dialkylaluminum halide.

The organo-aluminum compounds of the present disclosure are selected from the group consisting of alkylaluminums such as trialkylaluminum like triethylaluminum, triisopropylaluminum, triisobutylaluminum, tri-n-butylaluminum, tri-n-hexylaluminum, tri-n-octylaluminum; trialkenylaluminums like triisoprenylaluminum; dialkylaluminum halides like diethylaluminumchloride, dibutylaluminumchloride, diisobutylaluminumchloride and diethylaluminumbromide; alkylaluminumsesquihalides like ethylaluminumsesquichloride, butylaluminumsesquichloride and ethylaluminumsesquibromide; dialkylaluminum hydrides like diethylaluminum hydride and dibutylaluminum hydride; partially hydrogenated alkylaluminum like ethylaluminumdihydride and propylaluminumdihydride and aluminoxane like methylaluminoxane, isobutylaluminoxane, tetraethylaluminoxane and tetraisobutylaluminoxane; diethylaluminumethoxide, and combinations thereof.

In yet another embodiment, the unsupported titanium complex obtained in step (d) contains solvent, which is removed by filtration under nitrogen to obtain a solid. The brown solid is then subjected to washing with a dry hydrocarbon solvent followed by drying under vacuum and transferred to a glove box for finally using as the unsupported catalyst for olefin polymerization.

In the present context, "dry hydrocarbon solvent" refers to hydrocarbon solvents having very low water content, typically containing less than 10 ppm (parts per million) of water. Suitable examples of dry hydrocarbon solvent include heptane, hexane, isoparaffins, cyclohexane, toluene, and benzene.

In an exemplary embodiment, the unsupported titanium complex is prepared by the process which comprises the steps of: dissolving 50 to 150 mmol of titanium halide in the solvent followed by addition of 5 to 20 mmol of complexing agent at the desired temperature, for example, at 0°C-25°C to obtain the reaction mixture; heating the reaction mixture to a temperature ranging between 80°C to 150°C for less than 90 minutes, preferably between 85°C to 140°C for 60 to 90 minutes, more preferably between 90°C to 130 °C for 30 to 90 minutes to obtain the hot reaction mixture; adding 5 to 20 mmol of organo-aluminium compound to the hot reaction mixture at a desired temperature, for example, at a temperature ranging between 0°C to 30°C, preferably between 0°C to 25°C; stirring the reaction mixture at a suitable temperature, for example, at temperatures ranging between 30°C to 110°C, preferably between 35°C to 100°C; cooling the reaction mixture to room temperature (about 35°C); and removing the solvent by filtration under nitrogen to obtain a brown solid; treating or washing the brown solid with the dry hydrocarbon solvent followed by drying under vacuum and transferred to a glove box for use as a ZN catalyst.

In an embodiment, the unsupported titanium complex is used as catalyst for preparing ultra-high molecular weight poly alpha olefins from alpha olefin polymerization.

Another aspect of the present disclosure relates to the unsupported titanium complex obtained from the above method. Accordingly, the embodiments described hereinabove in respect of the method for preparing the unsupported titanium complex are applicable here as well.

Another aspect of the present disclosure provides a method for preparing a supported titanium complex comprising:
(a) mixing a magnesium compound of general formula:

   MgₚY_{q}

   wherein,
   `p' and `q' are real numbers ranging between 1 to 2, and
   Y is selected from a halogen, an alkyl group, and an alkoxy group having 2 to 4 carbon atoms,
   with the complexing agent, as described hereinabove, to obtain a reaction mixture, and
(b) mixing a titanium halide of following general formula:

   TiₘXₙ

   wherein,
   'm' and 'n' are real numbers ranging between 1 to 4, and
   X is a halogen,
   with the reaction mixture to obtain the supported titanium complex.

Accordingly, the embodiments described hereinabove in respect of the complexing agent are applicable here as well.

In an embodiment, the alkyl group may contain 2 to 4 carbon atoms. In another embodiment, the halogen is selected from chlorine, bromine, iodine, and fluorine. Preferably, the halogen is chlorine.

In an embodiment, the magnesium compound is selected from the group consisting of MgCl₂, MgCh.EtOH, and Mg(OEt)₂.

In an embodiment, the method for preparing the supported titanium complex comprises the following sub-steps:
(a1) mixing the magnesium compound with the complexing agent in the presence of a hydrocarbon solvent to obtain the reaction mixture;
(a2) heating the reaction mixture at a temperature ranging between 70°C to 150°C;
(b1) adding the titanium halide to the reaction mixture of step (a2); and
(b2) heating the reaction mixture of step (b1) at a temperature ranging between 70°C to 150°C.

Filtering, washing and drying after step (b2) results in the supported titanium catalyst.

Optionally, after step (b2), an organo-aluminum compound may be added to the reaction mixture at a temperature ranging between 40°C to 70°C. Subsequently, the reaction mixture is subjected to mixing by suitable means, followed by filtration to obtain the supported titanium complex. In the present context, the term "mixing" refers to the process of combining various ingredients to achieve a homogenous or uniform mixture. The term "mixing" is used interchangeably with the term "stirring" in the context of this specification. Further, the "mixing" process as defined herein may involve the use of mixing equipment, such as mixers, blenders, agitators, or other similar apparatuses, which facilitate the efficient and effective blending or dispersion of the ingredients. These mixing techniques can be conducted under specific conditions, such as temperature, pressure, or time, as necessary for achieving the desired homogeneity and consistency of the mixture. The person skilled in the art is well aware of such conditions and hence, the present invention is not limited by the same.

In another embodiment, the reaction mixture in step (b2) may be subsequently subjected to tempering at a temperature ranging between 80°C to 150 °C for a duration ranging between 10 h to 100 h to obtain the supported titanium catalyst. Thereafter, the supported catalyst is subjected to filtration and washing with the hydrocarbon solvent to remove any loosely bound titanium halide. Subsequently, the organo-aluminium compound is added to the hydrocarbon solvent under inert atmosphere and an active pro-catalyst is obtained. To this active pro-catalyst, suitable external electron donors are added and stirred for a suitable duration under inert atmosphere to obtain a Ziegler-Natta catalyst.

In the present context, "external electron donor" or "EED" refers to a type of compound that is added to a polymerization system along with the catalyst to modify the catalyst's properties and influence the polymerization process. The EED interacts with the catalyst, typically through coordination or complex formation, and can affect catalyst activity, stereoselectivity, molecular weight, and other polymer properties. Suitable examples of EEDs include, but are not limited to, alcohols such as isopropyl alcohol (IPA), tert-butyl alcohol (TBA), and ethyl benzoate; esters such as ethyl acetate, methyl p-toluate, or ethyl p-anisate; silicon compounds such as alkyl silanes (e.g., triethylsilane), siloxanes, or silazanes; amines such as secondary or tertiary amines; and phosphines and phosphites such as triethylphosphine or tris(2,4-di-tert-butylphenyl)phosphite.

Suitable organo-aluminum compounds can be selected from the group consisting of alkylaluminums such as trialkylaluminum like triethylaluminum, triisopropylaluminum, triisobutylaluminum, tri-n-butylaluminum, tri-n-hexylaluminum, tri-n-octylaluminum; trialkenylaluminums like triisoprenylaluminum; dialkylaluminum halides like diethylaluminumchloride, dibutylaluminum chloride, diisobutylaluminumchloride and diethylaluminumbromide; alkylaluminumsesquihalides like ethylaluminumsesquichloride, butylaluminumsesquichloride and ethylaluminumsesquibromide; dialkylaluminum hydrides like diethylaluminum hydride and dibutylaluminum hydride; partially hydrogenated alkylaluminum such as ethylaluminumdihydride and propylaluminumdihydride and aluminoxane like methylaluminoxane, isobutylaluminoxane, tetraethylaluminoxane and tetraisobutylaluminoxane; diethylaluminumethoxide, and mixtures thereof.

In another embodiment, the hydrocarbon solvent is selected from a group consisting of kerosene, toluene, xylene, hexane, petroleum ether, heptane, and combinations thereof.

Another aspect of the present disclosure relates to the supported titanium complex obtained from the above method. Accordingly, the embodiments described hereinabove in respect of the method for preparing the supported titanium complex are applicable here as well.

Still another aspect of the present disclosure provides a method for preparing a co-precipitated titanium complex comprising:
reacting a Grignard reagent of general formula:

R₁-Mg-X

wherein,
R₁ is selected from:
   (i) a linear or branched, substituted or unsubstituted alkyl having 1 to 10 carbon atoms; or
   (ii) a substituted or unsubstituted aryl having 6 to 12 carbon atoms; and
X is a halogen;
with a titanium compound of formula:

   Ti(OR₂)₄

   wherein,
R₂ is an alkyl group having 1 to 10 carbon atoms,
in presence of the above complexing agent to obtain the co-precipitated titanium complex.

Accordingly, the embodiments described hereinabove in respect of the complexing agent are applicable here as well.

In an embodiment the halogens include, but not limited to, chlorine, bromine, iodine, and fluorine.

In an embodiment, the method for preparing the co-precipitated titanium complex comprises: treating activated magnesium turnings with alkyl or aryl halides in presence of iodine in a hydrocarbon solvent to obtain the Grignard reagent. The magnesium turnings are heated in the hydrocarbon solvent for a suitable duration, followed by contacting with Ti(OR₂)₄ and the complexing agent at a suitable temperature range, for instance, at a temperature ranging between 0°C to 30°C, preferably between 0°C to 25°C to obtain a reaction mixture. The reaction mixture is subsequently heated at a temperature ranging between 80°C to 150°C to obtain the co-precipitated titanium complex.

Another aspect of the present disclosure relates to the co-precipitated titanium complex obtained from the above method. Accordingly, the embodiments described hereinabove in respect of the method for preparing the co-precipitated titanium complex are applicable here as well.

A further aspect of the present disclosure provides a method for preparing ultra-high molecular weight poly alpha olefins from alpha olefin polymerization in presence of the unsupported titanium complex, or the supported titanium complex, or the co-precipitated titanium complex, as described hereinabove.

Accordingly, the embodiments described hereinabove in respect of the unsupported titanium complex, the supported titanium complex, and the co-precipitated titanium complexes are applicable here as well.

In an embodiment, the method comprises the following steps: polymerizing an alpha olefin monomer at a temperature ranging between 0°C to 25°C in presence of the unsupported titanium complex, or the supported titanium complex, or the co-precipitated titanium complex, for a duration ranging between 5 h to 30 h; followed by quenching, washing and drying to obtain the ultra-high molecular weight poly alpha olefin.

In the present context, "alpha olefin monomer" refers to a specific class of unsaturated hydrocarbon compounds characterized by the presence of a double bond at the first carbon atom (alpha position) from the end of the carbon chain. The alpha olefin monomers are distinguished by their molecular structure, wherein the double bond is located between the first and second carbon atoms from the terminal end of the carbon chain. The alpha olefin monomers encompass a range of hydrocarbons with varying carbon chain lengths, including but not limited to 2-carbon to 20-carbon chain lengths. Examples of alpha olefin monomers include, but are not limited to, 1-butene, 1-hexene, 1-octene, 1-decene, and 1-dodecene, among others. These monomers may exist as individual compounds or as mixtures comprising different carbon chain lengths.

In an embodiment, the ultra-high molecular weight poly alpha olefins obtained in accordance with the present invention have a molecular weight (Mv, viscosity average) ranging between 1.0 × 10⁴ g/mol to 1.0 × 10⁸ g/mol. The ultra-high molecular weight poly alpha olefin finds application as drag reducing agent to enhance the flow properties and efficiency of the fluid system.

Still further aspect of the present disclosure is drawn towards use of a compound selected from the group consisting of: dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, crown ethers and combination thereof, as a complexing agent for preparing the unsupported titanium complex, or the supported titanium complex, or the co-precipitated titanium complex for alpha olefin polymerization, as described hereinabove. Accordingly, the embodiments described hereinabove in respect of the unsupported titanium complex, the supported titanium complex, and the co-precipitated titanium complexes are applicable here as well.

### ADVANTAGES OF THE PRESENT INVENTION

The present disclosure has several advantages associated with it. Some of these non-limiting advantages have been summarized herein-below:
- Use of environmentally benign and bio-based complexing agents rendering the synthesis of titanium complexes as green approach,
- Preparation of ultra-high molecular weight poly-alpha-olefins having enhanced or acceptable properties in comparison to the ones disclosed in existing prior arts, and
- Use of ultra-high molecular weight poly-alpha-olefins as drag reducing agents, thereby rendering efficient transportation of crude oil and various petroleum fractions via pipeline.

While the foregoing describes various embodiments of the disclosure, other and further embodiments of the disclosure may be devised without departing from the basic scope thereof. The invention is not limited to the described embodiments, versions or examples, which are included to enable a person having ordinary skill in the art to make and use the invention when combined with information and knowledge available to the person having ordinary skill in the art.

### EXAMPLES

The present invention is further explained in the form of following examples. However, it is to be understood that the following examples are merely illustrative and are not to be taken as limitations upon the scope of the invention.

**Materials:** Titanium tetrachloride, triethylaluminum, heptane, toluene, hexane, isosorbide, isomannide, benzoic acid, acetic acid, cyclopentyl methyl ether, resorcinol dimethylether, 9-crown-3, 12-crown-4, 15-crown-5, 18-crown-6, alpha olefins (1-decene), diethylaluminum chloride, and methanol. Reactions were performed using standard schlenk technique and Glove box wherever required. Catalyst was synthesized and stored under argon atmosphere. Polymerizations were performed using glass reactor. Hexane, toluene, heptane was distilled out from sodium benzophenone system and used freshly distilled solvents for catalyst synthesis and polymerization.

**Fourier Transform Infrared Spectroscopy (FTIR):** FTIR spectra were recorded with Perkin Elmer Spectrum GX equipment (Waltham, Massachusetts, USA). Samples were scanned with a resolution of 2 cm⁻¹ in the scan range of 4000-400 cm⁻¹.

**NMR analysis:** ¹H and ¹³C-NMR spectra were recorded on Bruker Avance 500 MHz spectrometer. Deuterated solvents for NMR experiments were obtained from Aldrich Chemical Co.

**Thermal Properties:** Differential scanning calorimetry (DSC Discovery 2500, TA Instruments Ltd, USA) characterization was performed to determine the glass transition, crystallization and melting behavior of the polymer, as per ASTM D 3418.

**Viscosity studies:** Viscosity average molecular weight was determined by using Ubbelohde viscometer and THF as solvent.

### Example 1

Titanium tetrachloride (100 mmol) was dissolved in dry toluene and then isosorbide-based benzoate ester as complexing agent (16.7 mmol) was added at desired temperature (temperature ranges from 0°C to 25 °C). The reaction mixture was warmed to 100°C for 30 to 90 minutes. Further, tri-ethyl aluminum (16.7 mmol) was added dropwise at desired temperature (temperature ranges from 0 °C to room temperature of about 35°C). The addition of tri-ethyl-aluminum was carried out in between 20 to 40 minutes. The reaction mixture was stirred for 20 minutes at temperature above the room temperature (about 35°C) and less than 110 °C. After cooling to room temperature (about 35°C), the solvent was then removed by filtration under nitrogen. The resultant solid obtained was washed thrice with dry hydrocarbon solvent. The solid was dried under vacuum and then transferred to glove box for further use.

The catalyst composition was then contacted with the pure monomer (1-decene, 10 mL) at 10 °C temperature. The polymerization reaction was run at 0 to 25 °C for 24 hours and then the polymerization reaction was kept at RT (about 35°C) for 48 hrs. The reaction was then quenched with 5% acidic methanol and kept till the polymer becomes colorless. Solid polymer obtained was washed with excess methanol and dried under vacuum at 45°C till the constant weight of polymer was observed. The polymer was then characterized using viscosity average molecular weight using Ubbelohde viscometer in THF solvent.

### Examples 2

Titanium tetrachloride (100 mmol) was dissolved in dry toluene and then isomannide based benzoate ester as complexing agent (16.7 mmol) was added at desired temperature (temperature ranges from 0°C to 25 °C). The reaction mixture was warmed to 100°C for 30 to 90 minutes. Further, tri-ethyl aluminum (16.7 mmol) was added dropwise at desired temperature (temperature ranges from 0°C to about 35°C). The addition of tri-ethyl-aluminum was carried out in between 20 to 40 minutes. The reaction mixture was stirred for 20 minutes at temperature above the room temperature (about 35°C) and less than 110°C. After cooling to room temperature (about 35°C), the solvent was then removed by filtration under nitrogen. Brown solid obtained was washed thrice with dry hydrocarbon solvent. The solid was dried under vacuum and then transferred to glove box for further use.

The catalyst composition was then contacted with the pure monomer (1-decene, 10 mL) at 10°C temperature. The polymerization reaction was run at 10 to 25 °C for 24 hours and then the polymerization reaction was kept at RT (about 35°C) for 48 hrs. The reaction was then quenched with 5% acidic methanol and kept till the polymer became colorless. Solid polymer obtained was washed with excess methanol and dried under vacuum at 45°C till the constant weight of polymer was observed. The polymer was then characterized using viscosity average molecular weight using Ubbelohde viscometer in THF solvent.

### Example 3

Titanium tetrachloride (100 mmol) was dissolved in dry toluene and then 18-crown-6 as complexing agent (16.7 mmol) was added dropwise at desired temperature (temperature ranges from -5 °C to 25 °C). The reaction mixture was warmed to 60°C to 100°C for 30 to 90 minutes. Further, tri-ethyl aluminum (16.7 mmol) was added dropwise at desired temperature (temperature ranges from -5°C to 25°C). The addition of tri-ethyl-aluminum was carried out in less than 30 minutes. The reaction mixture was stirred for 20 minutes at temperature above the room temperature (about 35°C) and less than 110°C. After cooling to room temperature (about 35°C), the solvent was then removed by filtration under nitrogen. Brown solid obtained was washed thrice with dry hydrocarbon solvent. The brown solid was dried under vacuum and then transferred to glove box for further use.

The catalyst composition was then contacted with the pure monomer (1-decene, 10 mL) at 10°C temperature. The polymerization reaction was run at 10 to 25 °C for 24 hours and then the polymerization reaction was kept at RT (about 35°C) for 48 hrs. The reaction was then quenched with 5% acidic methanol and kept till the polymer became colorless. Solid polymer obtained was washed with excess methanol and dried under vacuum at 45°C till the constant weight of polymer was observed. The polymer was then characterized using viscosity average molecular weight using Ubbelohde viscometer in THF solvent.

### Example 4

Titanium trichloride (0.010 g) was taken in hexane solvent (2 mL) and then isosorbide diphenyl ester (0.0086 gm) was added. The reaction mixture was stirred at RT (about 35°C) and activated with 10% solution of diethyl aluminum chloride in hexane (0.152 mL). The reaction mixture was stirred at RT (about 35°C) for 5-10 minutes. The catalyst composition was then contacted with the pure monomer (1-decene, 10 mL) at 10 °C temperature. The polymerization reaction was run at 10 to 25°C for 24 hours and then the polymerization reaction was kept at RT (about 35°C) for 48 hrs. The reaction was then quenched with 5% acidic methanol and kept till the polymer becomes colorless. Solid polymer obtained was washed with excess methanol and dried under vacuum at 45°C till the constant weight of polymer was observed. The polymer was then characterized using viscosity average molecular weight using Ubbelohde viscometer in THF solvent.

### Example 5

Titanium trichloride (0.010 g) was taken in hexane solvent (2 mL) and then isosorbide dimethyl ester (0.0056 gm) was added. The reaction mixture was stirred at RT (about 35°C) and activated with 10 % solution of diethyl aluminum chloride in hexane (0.152 mL). The reaction mixture was stirred at RT (about 35 °C) for 5-10 minutes. The catalyst composition was then introduced with the pure monomer (1-decene, 10 mL) at 10 °C temperature. The polymerization reaction was run at 10 to 25 °C for 24 hours and then the polymerization reaction was kept at RT (about 35°C) for 48 hrs. The reaction was then quenched with 5% acidic methanol and kept till the polymer becomes colorless. Solid polymer obtained was washed with excess methanol and dried under vacuum at 45 °C till the constant weight of polymer was observed. The polymer was then characterized using viscosity average molecular weight using Ubbelohde viscometer in THF solvent.

### Example 6

Titanium trichloride (0.030 g) was taken in hexane solvent (6 mL) and then isosorbide dimethyl ether (0.012 mL) was added. The reaction mixture was stirred at RT (about 35°C) and activated with 10 % solution of diethyl aluminum chloride in hexane (1.83 mL). The reaction mixture was stirred at RT (35°C) for 5-10 minutes. The catalyst composition was then introduced with the pure monomer (1-decene, 30 mL) at 10 °C temperature. The polymerization reaction was run at 10 to 25°C for 24 hours and then the polymerization reaction was kept at RT (about 35°C) for 48 hrs. The reaction was then quenched with 5% acidic methanol and kept till the polymer becomes colorless. Solid polymer obtained was washed with excess methanol and dried under vacuum at 45 °C till the constant weight of polymer observed. The polymer was then characterized using viscosity average molecular weight using Ubbelohde viscometer in THF solvent.

### Example 7

Titanium trichloride (0.020 g) was taken in hexane solvent (4 mL) and then 18-crown-6-ether (0.012 gm) was added. The reaction mixture was stirred at RT (about 35°C) and activated with 10 % solution of diethyl aluminum chloride in hexane (0.610 mL). The reaction mixture was stirred at RT (35°C) for 5-10 minutes. The catalyst composition was then introduced with the pure monomer (1-decene, 20 mL) at 10 °C temperature. The polymerization reaction was run at 10 to 25°C for 24 hours and then the polymerization reaction kept at RT (about 35°C) for 48 hrs. The reaction was then quenched with 5% acidic methanol and kept till the polymer becomes colorless. Solid polymer obtained was washed with excess methanol and dried under vacuum at 45 °C till the constant weight of polymer observed. The polymer was then characterized using viscosity average molecular weight using Ubbelohde viscometer in THF solvent.

### Example 8

Magnesium ethoxide (5 gm) was taken in RBF and 65 mL hexane was added under nitrogen. The reaction mixture was heated to 85 °C and TiCl₄ (3 mL) was added dropwise at 85 °C. The reaction mixture was heated at 85 °C for 120 minutes. Again, added dropwise 2.5 mL of TiCl₄ at 85 °C. The reaction mixture was heated at 85 °C for 90 minutes. Again, added dropwise 2.5 mL of TiCl₄ at 85 °C and heated for 120 minutes. 50 mL of heptane was syringed at 50 °C temperature. At 50 °C, triethylaluminum (5 mL) was added dropwise. The reaction mixture was stirred for 40 minutes at 30 °C and removed the solvent by filtration. Ti content was found to be 9.08 %. The catalyst composition was then introduced with the pure monomer (1-decene, 10 mL) at 10 °C temperature. The polymerization reaction was run at 10 to 25 °C for 24 hours and then the polymerization reaction kept at RT (about 35°C) for 48 hrs. The reaction was then quenched with 5% acidic methanol and kept till the polymer becomes colorless. Solid polymer obtained was washed with excess methanol and dried under vacuum at 45 °C till the constant weight of polymer observed. The polymer was then characterized using viscosity average molecular weight using Ubbelohde viscometer in THF solvent.

### Example 9

Magnesium ethoxide (5 gm) was taken in RBF and toluene (50 mL) was syringed. The temperature of the reaction maintained at 0 °C and the TiCl₄ (10 mL) was added dropwise. Reaction was heated to 70 °C and the isosorbide diphenyl ester (1.90 gm) as complexing agent was added by dissolving in toluene. The reaction mixture was heated at 110 °C for 2 hours. The reaction mixture was then cool down to 90 °C and the titanium tetrachloride was filtered out. Again TiCl₄ (10 mL) and toluene 50 mL was added. The reaction mixture was heated at 110 °C for 2 hours. The solvent and TiCl₄ was removed at 90 °C and washed with toluene (50 mL * 4) and then at 60 °C washed with hexane (50 mL * 3). The solid was dried under vacuum and stored under nitrogen atmosphere. The Ti content was found to be 9.37 % and magnesium content was 11.6%. The catalyst composition was then introduced with the pure monomer (1-decene, 10 mL) at 10 °C temperature. The polymerization reaction was run at a temperature of 10 to 25°C for 24 hours and then the polymerization reaction kept at RT (about 35 °C) for 48 hrs. The reaction was then quenched with 5% acidic methanol and kept till the polymer becomes colorless. Solid polymer obtained was washed with excess methanol and dried under vacuum at 45 °C till the constant weight of polymer observed. The polymer was then characterized using viscosity average molecular weight using Ubbelohde viscometer in THF solvent.

### Example 10

Magnesium chloride (4.76 gm) was taken in RBF and 65 mL toluene was added under nitrogen. The reaction mixture was heated to 90 °C and isosorbide diphenyl ester (1.76 g) was added. At 90 °C, TiCl₄ (30 mL) was added dropwise. The reaction mixture was heated at 110 °C for 120 minutes. The solvent and TiCl₄ were removed by filtration at 90 °C and solid was washed with hexane (50 mL *6). The solid was dried under vacuum and stored under nitrogen. The titanium content was found to be 6.2%. The catalyst composition was then introduced with the pure monomer (1-decene, 10 mL) at 10 °C temperature. The polymerization reaction was run at a temperature of 10 to 25 °C for 24 hours and then the polymerization reaction kept at RT (about 35 °C) for 48 hrs. The reaction was then quenched with 5% acidic methanol and kept till the polymer becomes colorless. Solid polymer obtained was washed with excess methanol and dried under vacuum at 45 °C till the constant weight of polymer observed. The polymer was then characterized using viscosity average molecular weight using Ubbelohde viscometer in THF solvent.

The polymer viscosity average molecular weight (Mv) was measured by intrinsic viscosity method. The measured intrinsic viscosity of the ultrahigh molecular weight polymer was based on the intrinsic viscosity of a 0.02% solution in THF at 25° C and using the equation [η] = KMα where η is the intrinsic viscosity, K = 5.19 × 10⁻³, M = molecular weight of polymer, mL/g and α = 0.77. Results of polymerization are shown in Table 1.

**Table 1: Results of polymerization of alpha-olefines (Examples 1-10).**

| Examples | Monomer | Catalyst | Co-catalyst | Complexing agent | Al:Ti | Time at low temperature (hour) | Mv (g/mol) | Polymer yield (gram) |
|---|---|---|---|---|---|---|---|---|
| 1 | 1-decene (10 mL) | TiCl_{3.}AlCl ₃/Isosorbid e diphenyl ester | DEAC | Isosorbide diphenyl ester | 5 | 24 | 7.1×10⁶ | 7.1 |
| 2 | 1-decene (10 mL) | TiCl_{3.}AlCl ₃/Isomanni de diphenyl ester | DEAC | Isomannide diphenyl ester | 5 | 24 | 5.9×10⁶ | 7.0 |
| 3 | 1-decene (10 mL) | TiCl_{3.}AlCl ₃/18-crown-6-ether | DEAC | 18-crown-6-ether | 5 | 24 | 7.2×10⁶ | 6.8 |
| 4 | 1 decene | TiCl₃.AlCl | DEAC | Isosorbide | 2.5 | 24 | 1.12×10⁷ | 7.2 |
| | (10 mL) | 3 | | diphenyl ester (0.5 equivalent) | | | | |
| 5 | 1 decene (10 mL) | TiCl₃.AlCl ₃ | DEAC | Isosorbide dimethyl ester (0.5 equivalent) | 2.5 | 24 | 9.63×10⁶ | 7.0 |
| 6 | 1 decene (10 mL) | TiCl₃.AlCl ₃ | DEAC | Isosorbide dimethyl ether (0.5 equivalent) | 2.5 | 24 | 8.4×10⁶ | 7.1 |
| 7 | 1 decene (20 mL) | TiCl₃.AlCl ₃ | DEAC | 18-crown-6-Ether (0.5 equivalent) | 2.5 | 24 | 7.57×10⁶ | 6.8 |
| 8 | 1-decene (10 mL) | Mg(OEt)₂. TiCl₄/Isoso rbide diphenyl ester | DEAC | Isosorbide diphenyl ester | 5 | 24 | 2.15×10⁶ | 7.0 |
| 9 | 1-decene (10 mL) | Mg(OEt)₂. TiCl₄/DEA C/Isosorbi de diphenyl ester | DEAC | Isosorbide diphenyl ester | 5 | 24 | 1.92×10⁶ | 6.6 |
| 10 | 1-decene (10 mL) | MgCl₂.TiC l₄/Isosorbi de diphenyl ester | DEAC | Isosorbide diphenyl ester | 5 | 24 | 1.82×10⁶ | 6.7 |

From the above table it can be observed that with the addition of complexing agents to the base titanium catalyst, the viscosity average molecular weight increases due to interaction of the complexing agent with titanium metal center.

The foregoing examples are merely illustrative and are not to be taken as limitations upon the scope of the invention. Various changes and modifications to the disclosed embodiments will be apparent to those skilled in the art. Such changes and modifications may be made without departing from the scope of the invention.

## Claims

1. A complexing agent for preparing a titanium complex for alpha olefin polymerization, wherein the complexing agent is selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

2. The complexing agent as claimed in claim 1, wherein the dianhydrohexitol is selected from a group consisting of isosorbide, isomannide, and isoidide.

3. The complexing agent as claimed in claim 1, wherein the crown ether is selected from a group consisting of 9-crown-3, 12-crown-4, 15-crown-5, 18-crown-6, and combination thereof.

4. A method for preparing an unsupported titanium complex comprising:
mixing a titanium halide of general formula:
TiₘXₙ
wherein,
'm' and 'n' are real numbers ranging between 1 to 4 and
X is a halogen,
with a complexing agent selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

5. The method as claimed in claim 4, wherein the method comprises the following steps:
(a) mixing the titanium halide with the complexing agent in a solvent to obtain a reaction mixture;
(b) heating the reaction mixture at a temperature ranging between 80°C to 150°C;
(c) adding an organo-aluminum compound to the reaction mixture of step (b); and
(d) mixing the reaction mixture of step (c) at a temperature ranging between 30°C to 110°C to obtain the unsupported titanium complex.

6. The method as claimed in claim 5, wherein the organo-aluminum compound is selected from a group consisting of trialkylaluminum, trialkenylaluminums, dialkylaluminum halides, alkylaluminumsesquihalides, dialkylaluminum hydrides, partially hydrogenated alkylaluminum, aluminoxane, and combinations thereof.

7. A method for preparing a supported titanium complex comprising:
(a) mixing a magnesium compound of general formula:
MgₚY_{q}
wherein,
`p' and `q' are real numbers ranging between 1 to 2, and
Y is selected from a halogen, an alkyl group, and an alkoxy group having 2 to 4 carbon atoms,
with a complexing agent to obtain a reaction mixture; and
(b) mixing a titanium halide of following general formula:
TiₘXₙ
wherein,
'm' and 'n' are real numbers ranging between 1 to 4, and
X is a halogen,
with the reaction mixture to obtain the supported titanium complex,
wherein the complexing agent is selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

8. The method as claimed in claim 7, wherein the method comprises the following sub-steps:
(a1) mixing the magnesium compound with the complexing agent in presence of a hydrocarbon solvent to obtain the reaction mixture;
(a2) heating the reaction mixture at temperature ranging between 70°C to 150°C;
(b1) adding the titanium halide to the reaction mixture of step (a2); and
(b2) heating the reaction mixture of step (b1) at a temperature ranging between 70°C to 150°C.

9. A method for preparing a co-precipitated titanium complex comprising:
reacting a Grignard reagent of general formula:
R₁-Mg-X
wherein,
R₁ is selected from:
(i) a linear or branched, substituted or unsubstituted alkyl having 1 to 10 carbon atoms, or
(ii) a substituted or unsubstituted aryl having 6 to 12 carbon atoms, and
X is a halogen,
with a titanium compound of formula:
Ti(OR₂)₄
wherein,
R₂ is an alkyl group having 1 to 10 carbon atoms,
in presence of a complexing agent to obtain the co-precipitated titanium complex,
wherein the complexing agent is selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, and crown ethers.

10. A method for preparing ultra-high molecular weight poly alpha olefins from alpha olefin polymerization in presence of: the unsupported titanium complex as claimed in one or more of claims 4 to 6, or the supported titanium complex as claimed in one or more of claims 7 to 8, or the co-precipitated titanium complex as claimed in claim 9.

11. Use of a compound selected from the group consisting of dianhydrohexitol based esters, dianhydrohexitol based ethers, cyclopentyl methyl ether, resorcinol dimethylether, resorcinol diphenyl ester, hydroquinone dimethyl ether, hydroquinone diphenyl ester, crown ethers and combination thereof, as a complexing agent for preparing an unsupported titanium complex, or a supported titanium complex, or a co-precipitated titanium complex for alpha olefin polymerization.
